# EUROPEAN PATENT APPLICATION

(11) **EP 4 571 652 A1**
(43) Date of publication of application: **18.06.2025**
(21) Application number: 23217267.6
(22) Date of filing: 15.12.2023
(51) Int. Cl.: G06T 11/00

(54) **PHOTON-COUNTING CT IMAGING**

(71) Applicant: Koninklijke Philips N.V., 5656 AG Eindhoven (NL)
(72) Inventor: NETSCH, Thomas, Eindhoven (NL); SCHMITT, Holger, Eindhoven (NL); RENISCH, Steffen, 5656AG Eindhoven (NL); SCHULZ, Heinrich, Eindhoven (NL); SOSSIN, Artur, Eindhoven (NL); BERGNER, Frank, Eindhoven (NL)
(74) Representative: Philips Intellectual Property & Standards

(57) **Abstract**

Image processing methods are provided for processing photon-counting CT images. The processing involves receiving denoised CT image data and, for each image voxel, deriving normal distribution mean and deviation values. Noise parameter images are generated from these per-voxel mean and deviation values and the denoised CT image data is compressed. During decompression, per-voxel mean and deviation noise values are obtained so that per-voxel noise is generated in the image domain. The per-voxel noise is applied to the decompressed denoised CT image.

## Description

### FIELD OF THE INVENTION

This invention relates to photon-counting CT imaging, and in particular it relates to image compression within such an imaging system.

### BACKGROUND OF THE INVENTION

Spectral photon-counting CT imaging systems generate multi-channel image data on the order of 10 Gigabyte, which is 10 to 20 times more compared to the conventional CT images per patient. The large size of data results in higher demands for storage and transmission and hence the application of efficient lossless (and lossy) image compression methods.

The reconstructed data consists of several channels / images such as photo-electric (P), scatter (S), combined (or conventional, C) and noise (N) images and eventually further mask images such as uric acid and bone masks. The reconstruction of these images takes place on or close to the image acquisition device (CT-Scanner) as system knowledge is required. From these base channels other images are derived such as virtual mono-energetic, Z-effective images and iodine overlays. Such derived images are generated typically on the fly on or close to the viewing system.

The P and S images are rather smooth images because they are already de-noised. Experiments show that for these images, lossless compression factors of 4 to 5 can be achieved. For the mask images, even higher factors can be achieved.

However, the noisy channels N and C significantly limit the compressibility of the data. Factors of 2 and higher cannot be reached for lossless encoding. The C channel is correlated with the other components. The mono-energetic 70 keV image (combination of P and S) with added noise N channel closely resembles the C image with differences in potential beam-hardening artifacts and blurring depending on the applied denoising level. This correlation can be used to yield high compression factors.

While noise does not carry any diagnostic information, it is still blended back into specific spectral results to give the look-and-feel for CT images, and furthermore, to hide imperfections in the denoising. Thus, the noise image is still needed. It is important to note that the noise image is just an estimate for the noise, as there is no perfect denoising.

The noise channel N cannot be efficiently compressed, and this limits the overall compressibility of the data. As a result, the most effective compression of the noise image N is not to store the noise channel within the data at all, but to generate a synthetic noise component whenever the image is displayed.

The gold standard in generating CT image noise is to take the noiseless reconstructed volume (fully denoised), perform forward projection and add realistic CT noise (potentially scaled to desired levels) and then perform the reconstruction with and without the noise addition to calculate a noise estimate in image space.

This approach is described in SE Divel, NJ Pelc. Accurate image domain noise insertion in CT images. IEEE Transactions on Medical Imaging, 39(6): 2020. doi:10.1109/TMI.2019.2961837.

Consequently, in a viewing workstation, the noise component must be generated on the fly, which is not feasible in the manner explained above because it is computationally intensive and requires full system knowledge and access to a hardware-accelerated CT reconstructor or otherwise optimized software components.

Another option is to mathematically derive a noise model in the image domain and then to use the parameters of this model, and possibly a moderate number of system parameters, to generate synthetic CT noise when the image is displayed, but without performing an expensive filtered back projection step. Instead, the noise is generated in the image domain by a much simpler algorithm.

For the purposes of compression, the resulting noise component N can be described by parameters only, and the storage requirements for these parameters are then negligible. Due to the filtered back projection algorithm used during reconstruction, the noise characteristics of an individual voxel depends on the measured (and noisy) signals of all projections passing the volume or slice, which makes it difficult to propose accurate spatial noise models.

There remains a need for an image processing approach which enables effective compression of a noise channel of photon-counting CT data.

### SUMMARY OF THE INVENTION

The invention is defined by the claims.

According to examples in accordance with an aspect of the invention, there is provided an image processing method for processing photon-counting CT images, comprising the steps of:
(i) receiving denoised CT image data;
(ii) for each image voxel, assuming a normal distribution of the image noise and obtaining mean and deviation values for the normal distribution;
(iii) creating noise parameter images comprising the per-voxel mean and deviation values; and
(iv) compressing at least the denoised CT image data.

This image processing method results in a higher compression rate of the reconstructed data of a patient. The noise channel is replaced by two noise parameter images. These may in a first example be compressed together with the denoised CT image data and with very high (lossless) compression factors because the images are smooth. Therefore, the compression of both images will be smaller than the (lossless) compressed image of the noise channel. In this case, the method further comprises compressing the noise parameter images so that they are communicated with the compressed denoised CT image data.

In a second example, the noise parameter images may be derived from the denoised image data using machine learning, so that noise information does not need to be transmitted at all and hence does not need compression. In this case, the noise parameter images may be created at the image reconstruction stage, based on the decompressed denoised CT image data.

The deviation value may be a standard deviation or variance or other suitable measure of deviation.

The denoised CT image data for example comprises a photo-electric image, P-image, and a scatter image, S-image.

In a first example, deriving mean and deviation values for the normal distribution for example comprises;
(iia) forward projecting the denoised image data to a projection image;
(iib) generating simulated CT image noise using a CT noise model;
(iic) reconstructing a CT image from the simulated CT image noise and the projection image;
(iid) repeating steps (iib) and (iic) a plurality of times to generate a plurality of reconstructed CT images; and
(iie) deriving the mean and deviation values from the plurality of reconstructed CT images.

This implementation uses a calculation of multiple reconstructions for the estimation of mean (µ) and deviation (σ) values. However, the compression step is only required once and can be triggered, for example, when data is offloaded for long time storage. In addition, cloud-based deployment schemes may provide the required resources in an efficient and effective manner using appropriate load balancing schemes.

In a second example, deriving mean and deviation values for the normal distribution comprises:
receiving a photo-electric image, P-image, and a scatter image, S-image;
providing the P-image and S-image to a trained machine learning algorithm; and
receiving the noise parameter images as the output of the trained machine learning algorithm.

This method avoids the need to perform multiple image reconstructions. Instead, from denoised data alone, in the form of a P-image and an S-image, the noise parameter images (of per-voxel mean and deviation) can be generated by a machine learning (e.g., a deep learning) algorithm. Thus, the noise parameter images can be created after transmission of the image data, so that the noise parameter images do not need to be compressed for transmission.

The machine learning algorithm is for example trained using mean and deviation values as ground truth values associated with training P-images and training S-images.

In this example, only the S-image and P-image need to be stored for a patient (i.e., the denoised image data). The noise is generated when needed in the image domain. The machine learning algorithm does not need to be stored locally. Instead, a reference pointing to the model may be maintained. The system does not depend on a particular reconstructed data set.

The reconstruction does not need scanner specifications or even a reconstruction algorithm for the synthetic noise generation. The system itself encodes this information. For a product implementation, the machine learning algorithm is specific for a dedicated scanner / reconstruction release and is stored alongside with other system parameters directly at the scanner or corresponding database.

The machine learning algorithm is for example trained using denoised training images, and for each training image by:
(i) forward projecting the denoised training image to a projection image;
(ii) generating simulated CT image noise using a CT noise model;
(iii) reconstructing a CT image from the simulated CT image noise and the denoised projection image;
(iv) repeating steps (ii) and (iii) a plurality of times to generate a plurality of reconstructed CT training images; and
(v) deriving the mean and deviation ground truth values from the plurality of reconstructed CT training images.

The invention also provides an image decompression method for processing photon-counting CT images, comprising the steps of:
(i) receiving compressed denoised CT image data;
(ii) decompressing the compressed denoised CT image data to derive a denoised CT image;
(iii) obtaining per-voxel noise mean and deviation values;
(iv) generating per-voxel noise in the image domain; and
(v) applying the per-voxel noise to the denoised CT image.

For this decompression, system information (scanner specifications, reconstruction hardware / software) is not needed. Instead, the noise is sampled in the image domain from a normal distribution (µ and σ estimated for every voxel position) which is very fast, and standard algorithms are available.

Step (i) may further comprise receiving compressed noise parameter images and the method further comprises decompressing the compressed noise parameter images to derive the per-voxel noise mean and deviation values. Alternatively, the per-voxel mean and deviation noise values are obtained from the decompressed denoised CT image data using a machine learning algorithm.

The compressed denoised CT image data for example comprises a compressed photo-electric image, P-image, and a compressed scatter image, S-image.

The invention also provides a computer program comprising computer program code which is adapted, when said program is run on a computer, to implement either of the methods defined above.

The invention also provides a method of communicating a medical image, comprising:
processing the medical image using the compression method defined above; and
decompressing the medical image using the decompression method defined above.

The invention also provides an image compression system for processing photon-counting CT images, comprising a processor which is configured to:
(i) receive denoised CT image data;
(ii) for each image voxel, assume a normal distribution of the image noise and deriving mean and deviation values for the normal distribution;
(iii) create noise parameter images comprising the per-voxel mean and deviation values; and
(iv) compress at least the denoised CT image data.

This system implements the compression method explained above.

The invention also provides an image decompression system for processing photon-counting CT images, comprising a processor which is configured to:
(i) receive compressed denoised CT image data;
(ii) decompress the compressed denoised CT image data to derive a denoised CT image;
(iii) obtain per-voxel noise mean and deviation values;
(iv) generate per-voxel noise in the image domain; and
(v) apply the per-voxel noise to the denoised CT image.

This system implements the decompression method explained above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 schematically illustrates a CT scanner;
Fig. 2 shows a first image processing approach;
Fig. 3 shows a second imaging approach;
Fig. 4 shows a first image processing method; and
Fig. 5 shows a second image processing method.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides image processing methods (including compression and decompression) for processing photon-counting CT images. The processing involves receiving denoised CT image data and, for each image voxel, deriving normal distribution mean and deviation values. Noise parameter images are generated from these per-voxel mean and deviation values and the denoised CT image data is compressed. During decompression, per-voxel mean and deviation noise values are obtained so that per-voxel noise is generated in the image domain. The per-voxel noise is applied to the decompressed denoised CT image.

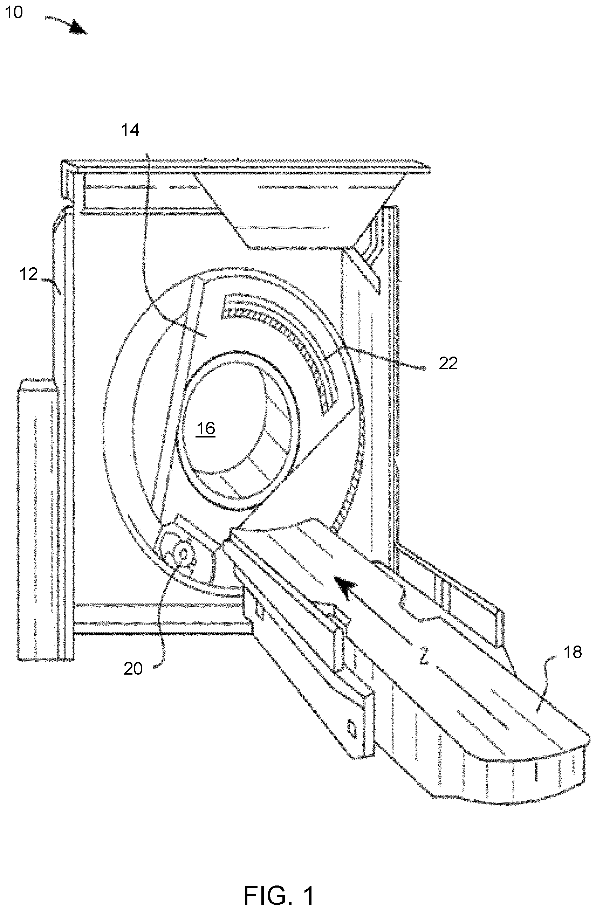

Fig. 1 schematically illustrates a CT scanner, for example based on a CZT direct conversion X-ray detector 10. The scanner 10 includes a generally stationary gantry 12 and a rotating gantry 14, which is rotatably supported by the stationary gantry 12 and rotates around an examination region 16 about a z-axis. A subject support 18, such as a couch, supports an object or subject in the examination region 16.

A radiation source 20, such as an X-ray tube, is rotatably supported by the rotating gantry 14, rotates with the rotating gantry 14, and emits radiation that traverses the examination region 16.

A radiation sensitive detector array 22 subtends an angular arc opposite the radiation source 20 across the examination region 16. The detector array 22 has an array of detector pixels.

The radiation sensitive detector array 22 detects radiation traversing the examination region 16 and generates (an) electrical signal(s) (projection data) indicative thereof.

The direct conversion detector for example uses a single broad spectrum X-ray tube, and radiation sensitive detector array 22 includes energy-resolving detectors in the form of direct conversion photon counting detectors. The detected signal is processed using a reconstructor to reconstruct spectral volumetric image data.

The invention relates to the processing of the detected signal and in particular provided methods that allow data transmission with reduced data volume.

In particular, algorithms are provided which shift the process of noise generation to the image domain. Noise parameter images are generated using per-voxel mean and deviation values, and a denoised CT image data and the noise parameter images can then be compressed in an efficient manner or else only the denoised CT image data needs to be transmitted and the noise can be added in the image domain from the CT image data alone.

In a first approach, the noise channel N is replaced by two, new parameter images which can be much better compressed than the original noise image N, considering that noise properties change only slowly across an image and parameters can be used for larger neighborhoods of pixel. Using the images, a realistic noise image can be easily generated in the image domain without any system knowledge and reconstruction resources.

In a second approach, a deep learning method may be used to estimate the parameter images from the other channels directly. Hence, instead of replacing the noise channel N by two other parameter images, the noise image N can then be replaced by a neural network which no longer depends on the images of the patient. The network depends on the scanner so does not need to be stored with the reconstructed image data of a patient. This results in higher image compression factors.

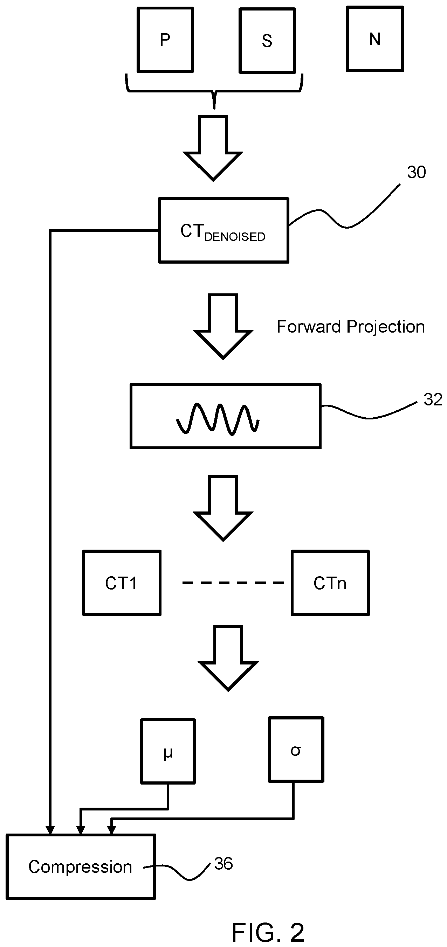

Fig. 2 shows a first image processing approach. It is assumed that a patient is being scanned by a spectral or photon-counting CT scanner for a certain anatomy and examination or scan type. The resulting reconstructed images S, P and N, shown at the top of Fig. 2, are compressed for more efficient storage and faster network transmission.

The channels S and P are compressed using any suitable known algorithm. The invention relates in particular to the way the noise image is processed.

From the S and P images, a denoised CT image 30 is obtained. This image is forward projected resulting in a series of projection images. The algorithm required for this step is already available as part of the reconstruction component of current scanners.

Following the gold standard for the generation of CT image noise (for example as described in SE Divel, NJ Pelc. Accurate image domain noise insertion in CT images. IEEE Transactions on Medical Imaging, 39(6): 1906-1916, 2020) a realistic CT noise model adds noise to the projections. This involves implementing a noise simulation a number, n, of times, as represented by block 32. CT images are reconstructed using the reconstructor of the CT scanner. The resulting synthetic noise image is stored.

As shown, the repetition n times yields n simulated CT images CT1 to CTn, each with a different noise realization, but generated by the same model.

For each voxel v of an image there are now n values because each reconstruction yields a different noise contribution.

Due to the central limit theorem, the sampled distribution of the voxel values of v tends towards a normal distribution even if the original variables themselves are not normally distributed. The larger n, the smaller the error becomes.

Hence, for each voxel v the mean and standard deviation (or other deviation/variance measure) are estimated or calculated. The mean and deviation values are formed into two images denoted as µ and σ in Fig. 2.

Thus, for each image voxel, a normal distribution of the image noise is assumed and mean and deviation values are obtained for the normal distribution.

The noise channel N can then be replaced by the images µ and σ. These are denoted as noise parameter images.

Image compression 36 then involves compressing the denoised CT image data and the noise parameter images.

Whenever noise information is needed to generate and display a derived image, a noise image is generated in the image domain. For each voxel v the corresponding image values are just sampled from the corresponding normal distribution using the respective values µv and σv from the noise parameter images.

This method results in a higher compression rate of the reconstructed data of a patient. The noise channel is replaced by two images for which very high (lossless) compression factors can be achieved because the images are smooth. Therefore, the compression of both images will be smaller than the (lossless) compressed image of the noise channel N.

For the decompression, system information (scanner specifications, reconstruction hardware / software) is not needed. Instead, the noise is sampled in the image domain from a normal distribution (µ and σ estimated for every voxel position) which is very fast, and standard algorithms are available.

This approach requires calculation of multiple reconstructions for the estimation of µ and σ, which thus requires a significant amount of data processing. However, the compression step is only required once and can be triggered, for example, when data is offloaded for long time storage. In addition, cloud-based deployment schemes may provide the required resources in an efficient and effective manner using appropriate load balancing schemes.

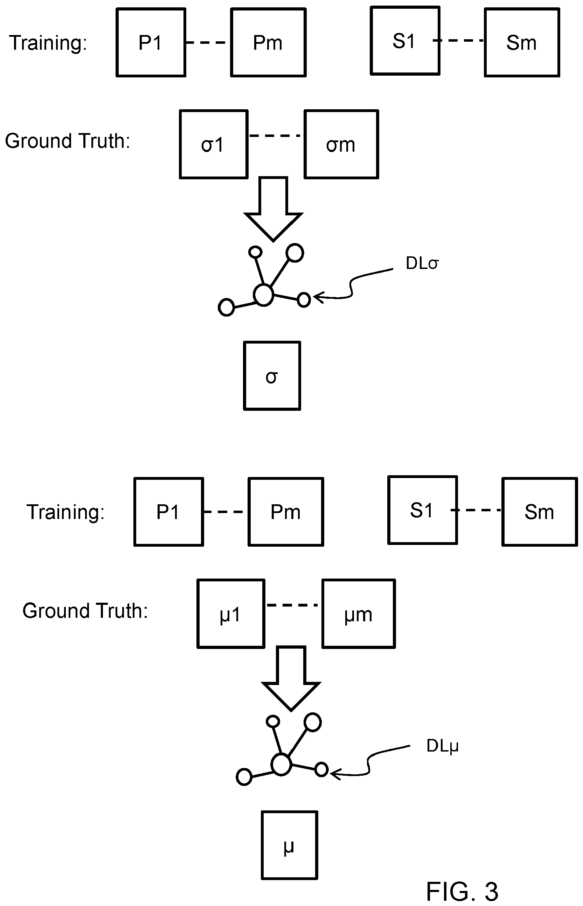

Fig. 3 shows a second imaging approach. It aims to reduce the computational load of the first approach described above. Given the same desire for channels P, S, and µ, σ, a deep learning technique may be used to generate the µ and σ channels from the P and S channels, instead of generating noise using a noise generation model. The channels are already denoised (S, P) or very smooth (µ, σ) which makes the training more stable.

The top part of Fig. 3 shows the training of the algorithm to generate the deviation image σ.

The training (which takes place only once) makes use of the approach as described above. Thus, using the approach described above, reconstruction data of m patients is available together with the σ images for those m reconstructions. The σ images are used as ground truth data for the algorithm training. Thus, the algorithm learns to derive a σ image from the denoised P and S images. The result of the training is a neural network DLσ.

The bottom part of Fig. 3 shows the same training approach of the algorithm to generate the mean image µ. Thus, for the parameter image µ the same process is followed and the output of this step is the neural network DLµ.

To generate a noise channel for a patient (S, P) the deep learning networks DLµ and DLσ are then used to calculate the images µ and σ and these images are used to derive the noise contribution in the same way as described above.

For this approach, only the S and P channels need to be transmitted and stored. The noise is always generated when needed as described above. The deep learning models do not need to be stored with the patient. Only a reference pointing to the model is maintained. The deep learning networks do not depend on a particular reconstructed data set. Furthermore, scanner specifications are not needed, or reconstruction algorithms for the synthetic noise generation. Once trained, the deep leaning networks themselves encode this information.

For a product implementation, the networks will be specific for a dedicated scanner (or reconstruction release) and may thus be stored alongside other system parameters directly at the scanner or corresponding database.

A picture archiving and communication system (PACS) may request the networks by using the links to the networks from the patient (DICOM) image data or hospital information system.

The combination of the two approaches above (i.e., the first approach for training and the second approach for implementation) yields very high compression factors. For example, the noise channel is no longer part of a data set. The P and S channels can be compressed using conventional methods.

It is noted that the σ channel may additionally be used as training input during the generation of the algorithm DLµ.

It has been assumed that a fully denoised CT image (i.e., fully denoised P and S channels) is received. Depending on the denoising step, additional faint anatomical structures may be hidden in the noise channel N. These structures will be "visible" in the parameter images µ and σ (used in the first implementation). It is possible to identify such structures by spatial image processing techniques and subtract them from the parameter images. The subtraction image can be added as further channel as input for the neural networks.

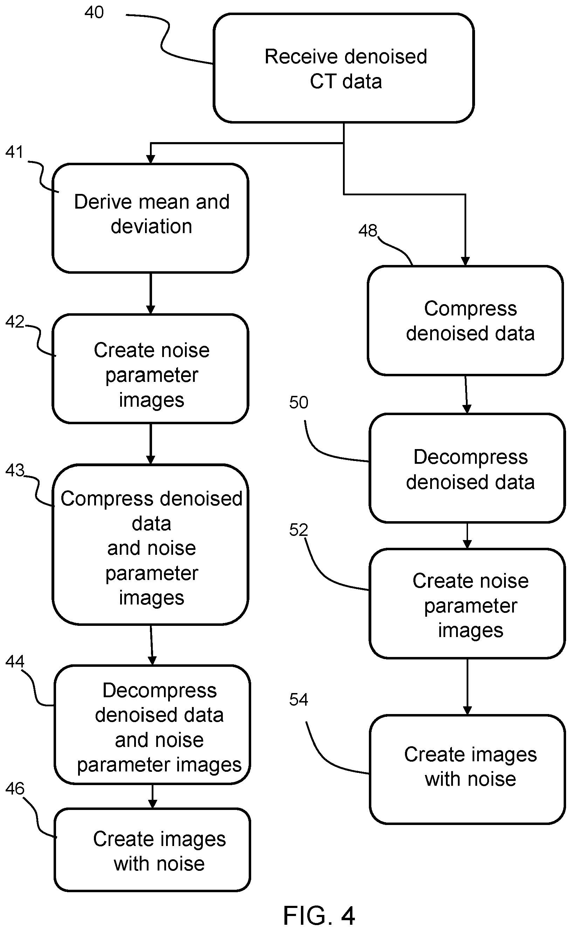

Fig. 4 shows an image processing method for processing photon-counting CT images.

It shows the two possible approaches explained above and shows the processing from initial denoised CT data through to the generation of the CT image with added noise.

In step 40, denoised CT image data is received. For each image voxel, a normal distribution of the image noise is assumed, so that mean and deviation (e.g., standard deviation or variance) values are obtained for the normal distribution.

As explained above, in a first implementation, the mean and deviation values are derived in step 41 by performing forward projections using noise modeling. This takes place at the CT scanning side before transfer of the image data.

Once the mean and deviation values are available, noise parameter images are created in step 42.

In step 43, the denoised CT image data and the noise parameter images are compressed.

The compressed images are then transmitted. After reception, the data and noise parameter images are decompressed in step 44, and images with noise are created in step 46.

In the second approach, using machine learning generation of the images with noise, only the P and S data is compressed and communicated in step 48, because the noise is generated with the image generation. In this case, the denoised data is decompressed in step 50, and the mean and deviation values, and hence the noise parameter images, are obtained in step 52 using the machine learning algorithms.

Images with noise can then be created in step 54.

It will be seen that both examples of the method involve the steps of compressing the denoised CT image data, assuming a normal distribution of the image noise and obtaining mean and deviation values for the normal distribution, and creating noise parameter images comprising the per-voxel mean and deviation values. However, the steps occur in different orders in the different implementations. Thus, it will be understood that the order in which steps are listed is not intended to be limiting.

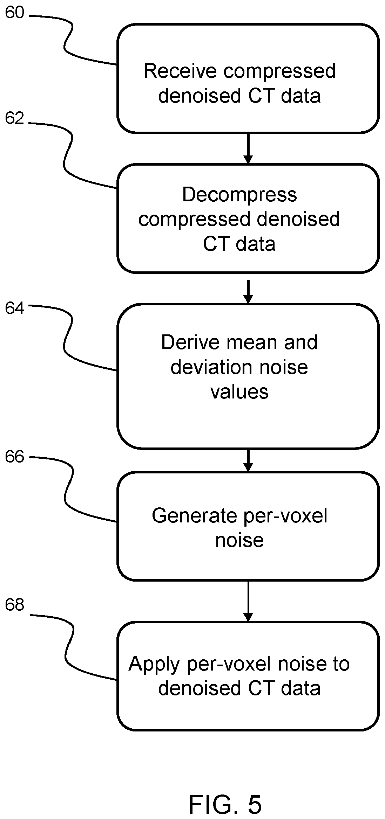

Fig. 5 shows an image processing method for processing photon-counting CT images. It shows in more detail the processing of received compressed data to generate an image with noise.

Compressed denoised CT image data is received in step 60 and is decompressed to derive a denoised CT image in step 62.

Per-voxel noise mean and deviation values are obtained in step 64. In the first implementation, this is achieved by decompressing noise parameter images that have also been transmitted with the denoised image data. In the second implementation, this is achieved by using a machine learning algorithm to process the decompressed denoised image data.

Per-voxel noise can then be generated in the image domain in step 66 and the per-voxel noise is applied to the denoised CT image in step 68.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. An image processing method for processing photon-counting CT images, comprising the steps of:
(i) (40) receiving denoised CT image data;
(ii) for each image voxel, assuming a normal distribution of the image noise and (42; 52) obtaining mean and deviation values for the normal distribution;
(iii) (44; 54) creating noise parameter images comprising the per-voxel mean and deviation values; and
(iv) (46; 48) compressing at least the denoised CT image data.

2. The method of claim 1, further comprising (46) compressing the noise parameter images.

3. The method of claim 1 or 2, wherein the denoised CT image data comprises a photo-electric image, P-image, and a scatter image, S-image.

4. The method of any one of claims 1 to 3, wherein deriving mean and deviation values for the normal distribution comprises;
(iia) forward projecting the denoised image data to a projection image;
(iib) generating simulated CT image noise using a CT noise model;
(iic) reconstructing a CT image from the simulated CT image noise and the projection image;
(iid) repeating steps (iib) and (iic) a plurality of times to generate a plurality of reconstructed CT images; and
(iie) deriving the mean and deviation values from the plurality of reconstructed CT images.

5. The method of claim 1, wherein deriving mean and deviation values for the normal distribution comprises:
receiving a photo-electric image, P-image, and a scatter image, S-image;
providing the P-image and S-image to a trained machine learning algorithm; and
receiving the noise parameter images as the output of the trained machine learning algorithm.

6. The method of claim 5, wherein the machine learning algorithm is trained using mean and deviation values as ground truth values associated with training P-images and training S-images.

7. The method of claim 6, wherein the machine learning algorithm is trained using denoised training images, and for each training image by:
(i) forward projecting the denoised training image to a projection image;
(ii) generating simulated CT image noise using a CT noise model;
(iii) reconstructing a CT image from the simulated CT image noise and the denoised projection image;
(iv) repeating steps (ii) and (iii) a plurality of times to generate a plurality of reconstructed CT training images; and
(v) deriving the mean and deviation ground truth values from the plurality of reconstructed CT training images.

8. An image decompression method for processing photon-counting CT images, comprising the steps of:
(i) (60) receiving compressed denoised CT image data;
(ii) (62) decompressing the compressed denoised CT image data to derive a denoised CT image;
(iii) (64) obtaining per-voxel noise mean and deviation values;
(iv) (66) generating per-voxel noise in the image domain; and
(v) (68) applying the per-voxel noise to the denoised CT image.

9. The method of claim 8, wherein step (i) further comprises receiving compressed noise parameter images and the method further comprises decompressing the compressed noise parameter images to derive the per-voxel noise mean and deviation values.

10. The method of claim 8, wherein comprising obtaining the per-voxel noise mean and deviation values from the decompressed denoised CT image data using a machine learning algorithm.

11. The method of any one of claims 8 to 10, wherein the compressed denoised CT image data comprises a compressed photo-electric image, P-image, and a compressed scatter image, S-image.

12. A computer program comprising computer program code which is adapted, when said program is run on a computer, to implement the method of any one of claims 1 to 11.

13. A method of communicating a medical image, comprising:
processing the medical image using the method according to any of claims 1-7; and
decompressing the medical image using the method according to any of claims 8-11.

14. An image compression system for processing photon-counting CT images, comprising a processor which is configured to:
(i) receive denoised CT image data;
(ii) for each image voxel, assume a normal distribution of the image noise and deriving mean and deviation values for the normal distribution;
(iii) create noise parameter images comprising the per-voxel mean and deviation values; and
(iv) compress at least the denoised CT image data.

15. An image decompression system for processing photon-counting CT images, comprising a processor which is configured to:
(i) receive compressed denoised CT image data;
(ii) decompress the compressed denoised CT image data to derive a denoised CT image;
(iii) obtain per-voxel noise mean and deviation values;
(iv) generate per-voxel noise in the image domain; and
(v) apply the per-voxel noise to the denoised CT image.
